# EUROPÄISCHE PATENTANMELDUNG

(11) **EP 3 951 516 A1**
(43) Veröffentlichungstag der Anmeldung: **09.02.2022**
(21) Anmeldenummer: 20189417.7
(22) Anmeldetag: 04.08.2020
(51) Int. Cl.: G05B 19/042, G06F 21/44, H04L 29/06

(54) **SYSTEM UND VERFAHREN ZUM VERIFIZIEREN VON KOMPONENTEN EINES INDUSTRIELLEN KONTROLLSYSTEMS**

(71) Anmelder: Siemens Aktiengesellschaft, 80333 München (DE)
(72) Erfinder: Palmin, Anna, 76187 Karlsruhe (DE); Xie, Xin, 76448 Durmersheim (DE)

(57) **Zusammenfassung**

System zum Verifizieren von Komponenten eines industriellen Kontrollsystems (100), wobei das System (600) umfasst ein erstes Modul (601), das konfiguriert ist, eine Vertrauensbeziehung mit einer Komponente (200) des industriellen Kontrollsystems (100) aufzubauen und ein Komponentenzertifikat (201) von der Komponente (200) abzufragen, wobei das Komponentenzertifikat (201) relevante Informationen bezüglich der Komponente (200) aufweist, ein zweites Modul (602), das konfiguriert ist, das Komponentenzertifikat (201) basierend auf in einer vertrauenswürdigen Datenbank (900) verwahrten relevanten Daten (901) und interagierend mit der Komponente (200) zu prüfen, und basierend auf einem Ergebnis der Prüfung eine Meldung zu generieren.

## Beschreibung

Die Erfindung betrifft ein System und ein Verfahren zum Verifizieren von Komponenten eines industriellen Kontrollsystems, vorzugsweise eines industriellen Kontrollsystems einer Automatisierungsanlage, insbesondere einer Produktions- oder Prozessanlage.

Darüber hinaus betrifft die Erfindung ein computerimplementiertes Geräteinventar und ein Computerprogramm.

Systeme und Verfahren zum Anbinden von Komponenten an ein industrielles Kontrollsystem beziehungsweise zum Anschließen von Komponenten an das Netzwerk einer industriellen Anlage sind aus dem Stand der Technik bekannt. Ein Beispiel eines solchen Systems ist ein sogenanntes Security Anomaly Detection Tool oder kurz Anomaly Detection Tool. Die Security Anomaly Detection Tools werden heute nicht nur zu ihrem primären Zweck (Anomaly Detection), sondern zunehmend auch dazu eingesetzt, die Anlagenkomponenten samt deren wichtigen Daten in einer Liste/einem Inventory automatisch zu erfassen. Das Vorhandensein eines solchen Inventory ist beispielsweise im führenden Industrial Security Standard IEC 62443, Teil 3-3 für die Erreichung von Security Levels 2 bis 4 ausdrücklich gefordert (siehe dazu z.B. die Anforderung "*11*.*10 SR 7.8* - *Control system component inventory: The control system shall provide the capability to report the current list of installed components and their associated properties."* Die automatische Erfassung der Anlagenkomponenten durch Security Anomaly Detection Tools hat gegenüber der manuellen Erfassung den Vorteil, dass sie sofort nach dem Anschließen der Komponenten an das Netzwerk ohne jegliche Mitwirkung des Anlagenpersonals erfolgt. Dadurch werden einerseits der erforderliche Zeitaufwand und andererseits die Fehlerwahrscheinlichkeit stark reduziert. Durch diese Art der Erfassung der Anlagenkomponenten wird insbesondere der Gerätetausch zur Laufzeit unterstützt, der ein sehr wichtiges Szenario im industriellen Umfeld repräsentiert.

Die heutigen Security Anomaly Detection Tools können bei Bedarf u.a. herstellerspezifische Gerätedaten aus den erfassten Netzwerkpaketen, die die Komponente an Operator Station (OS) oder an Enginnering Station (ES) sendet, extrahieren und sie nach bestimmten Kriterien verifizieren. Dabei kann beispielsweise die Zugehörigkeit eines bestimmten Gerätes zu einem bestimmten Hersteller anhand der von dem Hersteller vergebenen MAC-Adresse geprüft werden. Ein Angreifer könnte jedoch auch die MAC-Adresse aus dem von einem Original-Gerät verschickten Paket auslesen, diese MAC-Adresse in ein selbstgebautes Gerät einfügen und sich somit als das Original-Gerät auszugeben. Im Allgemeinen sind die MAC-Adressen zwar prinzipiell an die Hersteller gebunden, haben aber den Nachteil, dass sie änderbar/ konfigurierbar sind.

Da das Security Anomaly Detection Tool - wie oben erwähnt - die erfassten Anlagenkomponenten samt deren Daten (u.a. deren MAC-Adressen) in einer Liste/einem Inventory (das in der Regel nicht geschützt ist) ablegt, könnte ein Angreifer aber auch die MAC-Adresse beispielsweise aus der Dokumentation zum Original-Gerät herausnehmen und zum Vortäuschen der Identität eines Original-Gerätes missbrauchen.

Die vorgenannten Nachteile ergeben sich dadurch, dass die von einem Anomaly Detection Tool erfassten relevanten Gerätedaten nicht ausreichend zuverlässig und vertrauenswürdig sind, was zur Folge hat, dass die Originalität der von dem Anomaly Detection Tool erfassten Anlagenkomponenten, d.h. deren Identität und die Zugehörigkeit zu deren Hersteller nicht eindeutig nachweisbar und vertrauenswürdig ist. Somit können die nachgebauten und/oder manipulierten Fake-Geräte als Original-Geräte im Inventory einer Anlage angelegt werden und sich anschließend an der Kommunikation beteiligen, obwohl sie nicht vertrauenswürdig sind und ggf. (aus Nachlässigkeit oder vorsätzlich) die Systemintegrität und Verfügbarkeit der Anlage gefährden. Im Kontext der Industrial Security macht dies die Suche nach Lösungen, die das Risiko für die oben beschriebenen Manipulationen verringern (oder im Idealfall ausschließen) und somit ein höheres Schutzniveau ermöglichen, notwendig.

Somit kann die Aufgabe der vorliegenden Erfindung darin gesehen werden, die eingangs genannten Systeme und Verfahren hinsichtlich Sicherheit zu verbessern.

Die Aufgabe wird mit einem System der eingangs genannten Art erfindungsgemäß dadurch gelöst, dass das System ein erstes Modul und ein zweites Modul umfasst, wobei das erste Modul dazu konfiguriert ist, eine Vertrauensbeziehung mit einer Komponente des industriellen Kontrollsystems aufzubauen und ein Komponentenzertifikat von der Komponente abzufragen, wobei das Komponentenzertifikat relevante Informationen bezüglich der Komponente aufweist, und das zweite Modul dazu konfiguriert ist, das Komponentenzertifikat basierend auf in einer vertrauenswürdigen Datenbank verwahrten relevanten Daten und interagierend mit der Komponente zu prüfen und auf ein Ergebnis der Prüfung adäquat zu reagieren. Dabei kann das System in Reaktion auf das Ergebnis der Prüfung beispielsweise eine entsprechende Meldung, z.B. einen Alarm generieren und/oder eine entsprechende Aktion, z.B. Unterbrechen der Kommunikation mit der Komponente, einleiten.

Beim Anschließen der Komponente baut das System, welches beispielsweise als Anomaly Detection Tool ausgebildet sein kann, eine vorzugsweise vertrauliche Verbindung mit der Komponente auf und fordert die Komponente, ein Komponentenzertifikat an das System zu übersenden, damit das Komponentenzertifikat von dem System interaktiv (in Interaktion mit der Komponente) geprüft werden kann.

Der Aufbau einer Vertrauensbeziehung zwischen dem Anomaly Detection Tool und der Komponente kann dabei mit Hilfe einer in der Komponente (beispielsweise während der Inbetriebnahme) sicher hinterlegten Whitelist oder durch Ausführen einer zertifikatsbasierten Authentifizierung erfolgen. Im Falle der Verwendung einer Whitelist kann die Komponente nachprüfen, ob das Anomaly Detection Tool in der Liste eingetragen ist. Im Falle einer zertifikatsbasierten Authentifizierung kann die Komponente anhand bestimmter Kriterien und in dieser Komponente sicher hinterlegten Daten nachprüfen, ob sie dem Zertifikat des Anomaly Detection Tools, unter dessen Verwendung das Anomaly Detection Tool sich ihr gegenüber authentifiziert, und somit dem Anomaly Detection Tool selbst vertraut. Durch die zertifikatsbasierte Authentifizierung kann ein höheres Security- bzw. Vertrauens-Niveau als durch die Filterung mit Hilfe einer Whitelist zu erreichen sein.

Das Komponentenzertifikat enthält relevante Informationen über die Komponente. Die relevanten Informationen können beispielsweise aber nicht ausschließlich herstellerspezifische Informationen, wie z.B. Hersteller X, Gerätewerk Y etc., und/oder OEM(engl. Original Equipment Manufacturer)-spezifische und/oder integratorspezifische und/oder kundenanlagen- bzw. kundenteilanlagenspezifische Informationen umfassen.

Das Komponentenzertifikat wird in Interaktion mit der Komponente und basierend auf den relevanten Daten geprüft, welche in einer vertrauenswürdigen Datenbank verwahrt werden. Die (für die Prüfung) relevanten Daten können beispielsweise in einem Zertifikat-Repository des Komponentenherstellers aufbewahrt werden. Dabei kann das System beispielsweise auf das Zertifikat-Repository zugreifen, um einen Datenabgleich zwischen dem von der Komponente zur Verfügung gestellten Zertifikat und den Zertifikaten des Herstellers aus dem Zertifikat-Repository durchzuführen. Je nach Ergebnis der Prüfung kann das System eine entsprechende Meldung generieren und/oder ein Ausschließen der Komponente aus der Kommunikation im Netz des industriellen Kontrollsystems bewirken.

Das Komponentenzertifikat kann beispielsweise aber nicht ausschließlich von einem OEM (z.B. von einem Ingenieurbüro), einem Integrator oder in einem anderen Bereich der Kundenanlage (beispielsweise im Wareneingang) ausgestellt sein, und somit eine Bindung der Komponente an diesen OEM/ Integrator /die Kundenanlage repräsentieren.

In diesem Fall können die für die Verifikation relevanten Daten beispielsweise aber nicht ausschließlich herstellerspezifische Daten, wie z.B. Hersteller "X", Gerätewerk "Y", Zertifikat "ABC" etc., und/oder OEM-spezifische Daten und/oder integratorspezifische Daten und/oder kundenanlagen- bzw. kundenteilanlagenspezifische Daten umfassen.

Somit sind alle hier beschriebenen Ausführungsformen auch in dem Fall gültig, wenn das Komponentenzertifikat die Komponente an den OEM/Integrator oder die jeweilige Kundenanlage bindet. Je nach dem Aussteller des Komponentenzertifikats werden die entsprechenden Daten (für die Prüfung) verwendet.

Somit weist das System die Fähigkeit auf, eine fundierte und nicht-manipulierbare Verifikation der Identität und der Originalität (der Zugehörigkeit von Anlagenkomponenten zu deren Herstellern) durchzuführen. Die Verifikation kann ad-hoc (im Bedarfsfall, beispielsweise sofort nach dem Anschließen der Komponente an das Netzwerk) oder zyklisch proaktiv durchgeführt werden.

Darüber hinaus reagiert das System auf das Ergebnis der Prüfung adäquat, indem es beispielsweise eine entsprechende Meldung generiert und/oder eine entsprechende Aktion, z.B. Unterbrechen der Kommunikation mit der Komponente, einleitet.

Die Verifizierung der Komponenten und folglich ihre Erfassung in dem industriellen Kontrollsystem kann anhand des Systems vollautomatisiert erfolgen.

Im Zusammenhang mit der vorliegenden Erfindung wird unter dem Begriff "Modul" ein Hardware- oder ein Software-Modul oder eine Mischung von Hardware- und Software-Modulen verstanden.

Insbesondere kann das erste und das zweite Modul des Systems jeweils als ein Softwaremodul, beispielsweise als ein entsprechender Teil eines Programmcodes ausgebildet sein.

Insbesondere kann ein Modul physische und/oder logische Teilmodule umfassen.

Bei einer Ausführungsform kann es zweckmäßig sein, wenn die Komponente konfiguriert ist, bei der Prüfung ihren privaten Schlüssel zum Komponentenzertifikat zu verwenden, ohne diesen privaten Schlüssel preiszugeben. Dabei kann die Komponente unter Verwendung eines geeigneten kryptographischen Verfahrens gegenüber dem System beweisen, dass sie (die Komponente) den privaten Schlüssel (engl. Private Key) zum Komponentenzertifikat (bzw. zu dem in dem Komponentenzertifikat enthaltenen öffentlichen Schlüssel, engl. Public Key) kennt, ohne diesen preiszugeben.

Bei einer Ausführungsform kann es zweckdienlich sein, wenn das System einen sicheren, vorzugsweise gegen unberechtigte Änderungen beziehungsweise Manipulationen geschützten (z.B. physischer oder logischer) Speicher oder Speicherort aufweist und dazu konfiguriert ist, die relevanten Daten von der vertrauenswürdigen Datenbank, z.B. von dem Zertifikat-Repository des Herstellers, in regelmäßigen Zeitabständen oder ereignisgesteuert (z.B. getriggert durch Änderungen der Zertifikate/Trust Chains oder der Sperrlisten seitens des Herstellers) über eine sichere Verbindung zu beziehen und auf dem sicheren Speicher zu hinterlegen oder zu installieren.

Beispielsweise kann das zweite Modul den sichereren (z.B. physischen oder logischen) Speicher bzw. Speicherort umfassen, auf dem beispielsweise die Zertifikate und die zugehörigen Trust Chains und/oder Zertifikatssperrlisten abgelegt werden können. Somit kann das zweite Modul beispielsweise einen physischen Teil, der als physischer sicherer Speicher ausgebildet ist, und ein Softwaremodul aufweisen, wobei das Softwaremodul zum Durchführen der vorgenannten Funktion - Beziehen der für die Prüfung relevanten Daten und deren Hinterlegen oder Installieren auf dem sicheren Speicher bzw. Speicherort - eingerichtet ist.

Bei einer Ausführungsform kann vorgesehen sein, dass die Prüfung drei mögliche Ergebnisse aufweisen kann: "Prüfung erfolgreich", "Prüfung fehlgeschlagen" oder "Prüfung ist nicht möglich".

Das Ergebnis der Prüfung "Prüfung ist nicht möglich" kann beispielsweise dann auftreten, wenn sich beim Vergleich der Zertifikate herausstellt, dass ein entsprechendes Zertifikat unter den Komponentenherstellerzertifikaten fehlt.

Bei einer Ausführungsform kann vorgesehen sein, dass das Komponentenzertifikat ein Herstellergerätezertifikat ist. Im Gegensatz zu einer MAC-Adresse kann ein Komponentenzertifikat und insbesondere ein Herstellergerätezertifikat nicht erfolgreich manipuliert werden. Das bedeutet beispielsweise, dass ein nachgebautes oder manipuliertes Gerät, welches (im Gegensatz zum Originalgerät) nicht über den privaten Schlüssel zum Herstellergerätezertifikat verfügt, nicht erfolgreich nachweisen kann, dass das Herstellergerätezertifikat ihm gehört.

Bei einer Ausführungsform kann es vorteilhaft sein, wenn die relevanten Daten Vertrauensketten (engl. Trust Chain) und/oder eine Zertifikatssperrliste bzw. Zertifikatssperrlisten umfassen, wobei die Vertrauensketten zum Komponentenzertifikat gehören sollen. Wenn dabei beispielsweise die Vertrauensketten auf einem sicheren (physischen oder logischen) Speicher bzw. Speicherort des Systems hinterlegt sind, kann die Prüfung schnell erfolgen, indem das Komponentenzertifikat mit den hinterlegten Vertrauensketten des Herstellers verglichen werden. Wenn die Zertifikatssperrlisten vom Hersteller vorliegen, kann das System auch den Revokationsstatus prüfen und, ob das Komponentenzertifikat, das gerade geprüft wird, gesperrt ist oder nicht.

Bei einer Ausführungsform kann es mit Vorteil vorgesehen sein, dass das System ein drittes Modul umfasst, das konfiguriert ist, relevante Informationen aus dem Komponentenzertifikat in ein computerimplementiertes Geräteinventar aufzunehmen und diese relevanten Informationen entsprechend dem Ergebnis der Prüfung zu kennzeichnen, beispielsweise zu highlighten oder mit einem adäquaten Status und/oder Flag zu versehen.

Vorzugsweise umfasst das dritte Modul das computerimplementierte Geräteinventar.

Bei einer Ausführungsform kann es zweckdienlich sein, wenn das System ein viertes Modul umfasst, das konfiguriert ist, unterschiedliche Prüfungsprofile für die Prüfung unterschiedlicher Komponenten zu erstellen und/oder zu konfigurieren und/oder zu nutzen.

Bei einer Ausführungsform kann es vorgesehen sein, dass das System ein fünftes Modul umfasst, das konfiguriert ist, in Abhängigkeit von dem Ergebnis der Prüfung unterschiedliche Aktionsprofile zu erstellen und/oder zu konfigurieren und/oder zu nutzen und/oder weitere Kommunikation zwischen der Komponente und/oder anderen Anlagenkomponenten zu unterbinden.

Die Aufgabe der Erfindung wird auch mit einem computerimplementierten Verfahren der eingangs genannten Art erfindungsgemäß dadurch gelöst, dass
- eine Vertrauensbeziehung mit einer Komponente des industriellen Kontrollsystems aufgebaut und ein Komponentenzertifikat von der Komponente abgefragt wird, wobei das Komponentenzertifikat relevante Informationen bezüglich der Komponente aufweist,
- das Komponentenzertifikat in Interaktion mit der Komponente und basierend auf in einer vertrauenswürdigen Datenbank verwahrten relevanten Daten geprüft wird und
- auf ein Ergebnis der Prüfung adäquat reagiert wird.

Dabei kann in Reaktion auf das Ergebnis der Prüfung beispielsweise eine entsprechende Meldung, z.B. einen Alarm generiert und/oder eine entsprechende Aktion, z.B. Unterbrechen der Kommunikation mit der Komponente, eingeleitet werden.

Bei einer Ausführungsform kann es mit Vorteil vorgesehen sein, dass die Komponente bei der Prüfung ihren privaten Schlüssel zum Komponentenzertifikat verwendet, ohne diesen privaten Schlüssel preiszugeben.

Bei einer Ausführungsform kann es vorteilhaft sein, wenn die relevanten Daten und vorzugsweise zusätzlich die OEM-spezifischen, Integrator-spezifischen oder kundenanlagenspezifischen Daten von der vertrauenswürdigen Datenbank in regelmäßigen Zeitabständen oder ereignisgesteuert über eine sichere Verbindung bezogen und auf einem sicheren Speicher hinterlegt oder, wenn diese z.B. Zertifikate umfassen, installiert werden.

Bei einer Ausführungsform kann es zweckmäßig sein, wenn das Komponentenzertifikat ein Herstellergerätezertifikat ist und/oder die relevanten Daten Vertrauensketten und/oder eine (oder mehrere) Zertifikatssperrliste(n) zum Komponentenzertifikat umfassen.

Bei einer Ausführungsform kann es mit Vorteil vorgesehen sein, dass relevante Informationen aus dem Komponentenzertifikat in ein computerimplementiertes Geräteinventar aufgenommen werden und diese relevanten Informationen entsprechend dem Ergebnis der Prüfung gekennzeichnet, beispielsweise gehighlightet oder mit einem adäquaten Status und/oder Flag versehen werden.

Bei einer Ausführungsform kann es vorteilhaft sein, wenn unterschiedliche Prüfungsprofile für die Prüfung unterschiedlicher Komponenten erstellt und/oder konfiguriert und/oder genutzt werden.

Bei einer Ausführungsform kann es mit Vorteil vorgesehen sein, dass in Abhängigkeit von dem Ergebnis der Prüfung unterschiedliche Aktionsprofile erstellt und/oder konfiguriert und/oder genutzt werden und/oder weitere Kommunikation zwischen der Komponente und anderen Anlagenkomponenten unterbunden wird.

Darüber hinaus wird die Aufgabe mit einem computerimplementierten Geräteinventar der eingangs genannten Art erfindungsgemäß dadurch gelöst, dass das Geräteinventar zumindest ein Komponentenzertifikat einer Komponente und eine der Komponente zugehörige Meldung umfasst, wobei die Meldung durch das vorgenannte Verfahren generiert ist.

Obendrein wird die Aufgabe mit einem Computerprogramm erfindungsgemäß dadurch gelöst, dass das Computerprogramm Befehle umfasst, die bei der Ausführung des Programms durch ein System dieses veranlassen, das vorgenannte Verfahren auszuführen.

Außerdem wird ein interaktives Verifizieren einer Komponente eines industriellen Kontrollsystems unter Verwendung eines Komponentenzertifikats der Komponente offenbart.

Zusammenfassend werden Systeme und Verfahren bereitgestellt, die das Problem lösen, dass bestimmte relevante Gerätedaten, anhand derer Komponenten eines industriellen Kontrollsystems verifiziert werden, leicht manipulierbar und somit nicht vertrauenswürdig sind.

Im Folgenden wird die Erfindung anhand der in den Figuren dargestellten Ausführungsbeispiele näher beschrieben und erläutert. Es zeigen:
- FIG 1 bis FIG 4: Verifizieren von Anlagekomponenten mittels Anomaly Detection Tools nach dem Stand der Technik,
- FIG 5: interaktive Prüfung eines Herstellergerätezertifikats durch ein Anomaly Detection Tool,
- FIG 6: ein Anomaly Detection Tool,
- FIG 7: Eintragung der Prüfungsergebnisse in ein computerimplementiertes Geräteinventar,
- FIG 8: Beantragung eines Herstellergerätezertifikats durch ein Gerät,
- FIG 9: Ausstellung eines Herstellergerätezertifikats,
- FIG 10: ein weiteres Anomaly Detection Tool, und
- FIG 11: ein Flussdiagramm eines Verfahrens zum Verifizieren von Komponenten.

In den Ausführungsbeispielen und Figuren können gleiche oder gleich wirkende Elemente jeweils mit den gleichen Bezugszeichen versehen sein.

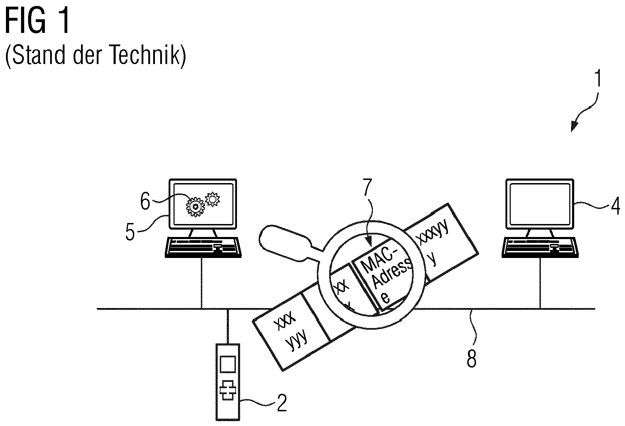

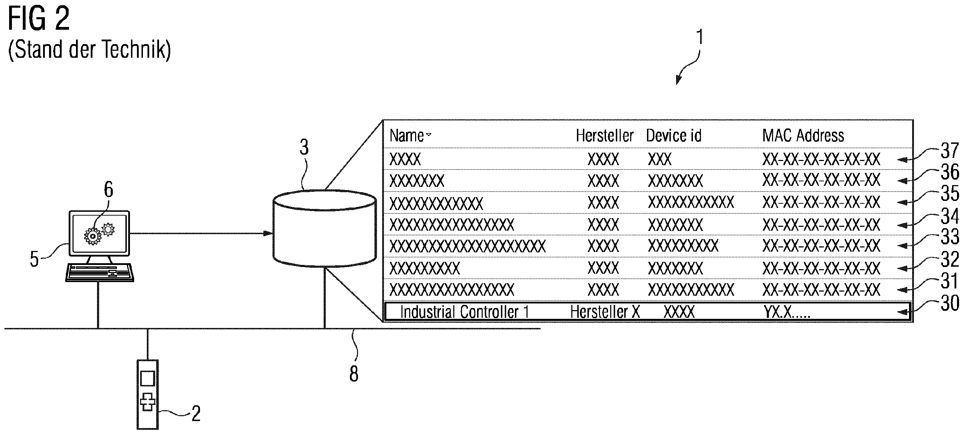

Zunächst wird auf Figuren 1 bis 4 Bezug genommen, die den Stand der Technik kurz umreißen. Figuren 1 bis 4 zeigen ein industrielles Kontrollsystem 1 einer Automatisierungsanlage, insbesondere einer Produktions- oder Prozessanlage. Die Komponenten des industriellen Kontrollsystems 1 sind beispielsweise über industrielles Ethernet 8 verbunden. Es versteht sich, dass die Komponenten des industriellen Kontrollsystems 1 auch über andere gängige Verbindungsarten, zum Beispiel WLAN, Bluetooth, WAN etc. zwecks Informationsaustausches verbunden sein können. Figuren 1 und 2 illustrieren eine Situation, bei der ein (neues) Gerät 2 an das industrielle Kontrollsystem 1 angeschlossen, verifiziert und in ein computerimplementiertes Geräteinventar 3 aufgenommen wird. Das Gerät 2 ist als Industrial Controller ausgebildet.

Beim Anschließen des Industrial Controllers 2 an das industrielle Kontrollsystem 1 tauscht das Industrial Controller 2

Informationen mit einem Server 4 aus, der beispielsweise Funktionalitäten einer Operator Station (OS) oder einer Enginnering Station (ES) aufweist und dazu konfiguriert ist, das Anschließen bzw. das Onboarding des Industrial Controllers durchzuführen.

Ein anderer Server 5 weist ein System 6 zum Verifizieren von Komponenten bzw. Geräten des industriellen Kontrollsystems 1 auf.

Die Server 4 und 5 müssen nicht gentrennt sein. Ihre Funktionalitäten kann ein einziger Server aufweisen (hier nicht dargestellt).

Das System 6 ist als ein Anomaly Detection Tool ausgebildet, welches dem Traffic zwischen dem Industrial Controller 2 und dem OS/ES-Server 4 lauscht, um die MAC-Adresse 7 des Industrial Controllers 2 abzulesen. Der Industrial Controller 2 ist ein Originalgerät.

Die Security Anomaly Detection Tools nach dem Stand der Technik können bei Bedarf u.a. herstellerspezifische Gerätedaten (z.B. MAC-Adressen 7) aus den erfassten Netzwerkpaketen extrahieren und sie nach bestimmten Kriterien verifizieren. Dabei kann u.a. die Zugehörigkeit eines bestimmten Gerätes zu einem bestimmten Hersteller anhand der von dem Hersteller vergebenen MAC-Adresse 7 geprüft werden.

Anhand der abgelesenen MAC-Adresse 7 kann das Anomaly Detection Tool 6 beispielsweise auf den Namen und auf den Hersteller des Geräts 2 schließen.

Nachdem das Anomaly Detection Tool 6 anhand der MAC-Adresse 7 die herstellerspezifischen Informationen ermittelt hat, legt es für das Gerät 2 einen neuen Geräteinventareintrag 30 in dem computerimplementierten Geräteinventar 3 an. Das Geräteinventar weist für gewöhnlich mehrere Einträte 30, 31, 32, 33, 34, 35, 36, 37 auf (FIG 2).

Ein für ein Gerät angelegter Geräteinventareintrag 30, 31, 32, 33, 34, 35, 36 oder 37 kann beispielsweise folgende (Meta-)Informationen enthalten:
- die Geräte MAC-Adresse 7,
- die Geräte-IP Adresse (statisch oder dynamisch),
- die Geräte-MLFB (statisch) (MLFB = Maschinenlesbare Fabrikatebezeichnung),
- das Herstellergerätezertifikat (engl. Manufacturer Device Certificate, MDC) (statisch),
- das anlagenspezifische bzw. anlagenbezogene Kundengerätezertifikat (engl. Customer Device Certificate, CDC),
- das projektbezogene Gerätezertifikat (engl. Project related Device Certificate, PDC) oder (falls das Gerät in mehreren Projekten eingesetzt wird) eine Mehrzahl an derartigen Zertifikaten (dynamisch),
- projektbezogene operative Zertifikate, die von der Geräteinstanz bereits bezogen wurden (dynamisch),
- weitere Informationen bzgl. der technischen und mechanischen Features, u.a. bzgl. der Performance und der unterstützten Kommunikations- und/oder Applikationsprotokolle (statisch und/oder dynamisch).

Das Geräteinventar 3 ist in der Regel nicht geschützt, sodass ein Angreifer die MAC-Adresse 7 beispielsweise aus der Dokumentation zum Originalgerät 2 herausnehmen und zum Vortäuschen der Identität eines Original-Gerätes missbrauchen kann.

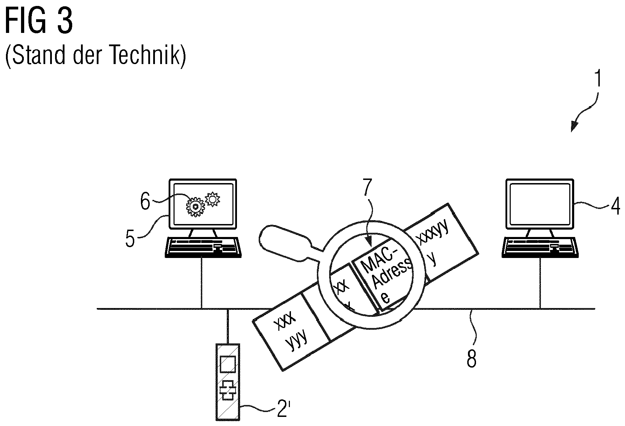

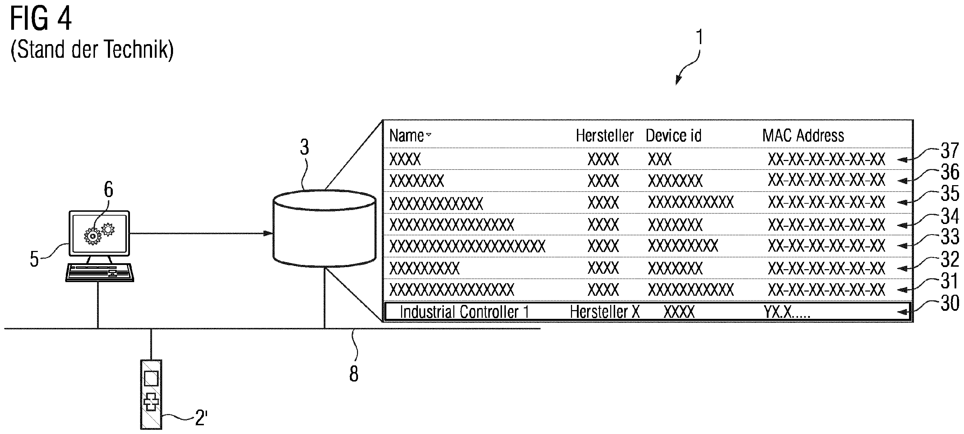

Ein möglicher Angriff dieser Art ist in Figuren 3 und 4 veranschaulicht.

FIG 3 illustriert das Anschließen eines manipulierten Geräts 2', zum Beispiel eines Industrial Controllers an das industrielle Kontrollsystem 1. Bei dem manipulierten Gerät 2' kann sich beispielsweise um ein nachgebautes Gerät handeln. Das manipulierte Gerät 2' ist kein Originalgerät 2. Dennoch weist das manipulierte Gerät 2' die MAC-Adresse 7 eines Originalgeräts 2 auf.

Nachdem das Anomaly Detection Tool 6 das entsprechende Netzwerkpaket erfasst und die MAC-Adresse 7 aus diesem Netzwerkpaket extrahiert hat, legt es einen entsprechenden Geräteinventareintrag 30 in dem computerimplementierten Geräteinventar 30 an (FIG 4). Da die MAC-Adresse 7 des manipulierten Geräts 2' und die MAC-Adresse 7 des Originalgeräts 2 identisch sind, wird das manipulierte Gerät 2' erfolgreich verifiziert, obwohl es kein Originalgerät 2 ist. Anschließend kann sich das manipulierte Fake-Gerät 2' als Originalgerät 2 an der Kommunikation in dem industriellen Kontrollsystem 1 der Anlage beteiligen, obwohl es nicht vertrauenswürdig ist und ggf. (aus Nachlässigkeit oder vorsätzlich) die Systemintegrität und Verfügbarkeit der Anlage gefährden.

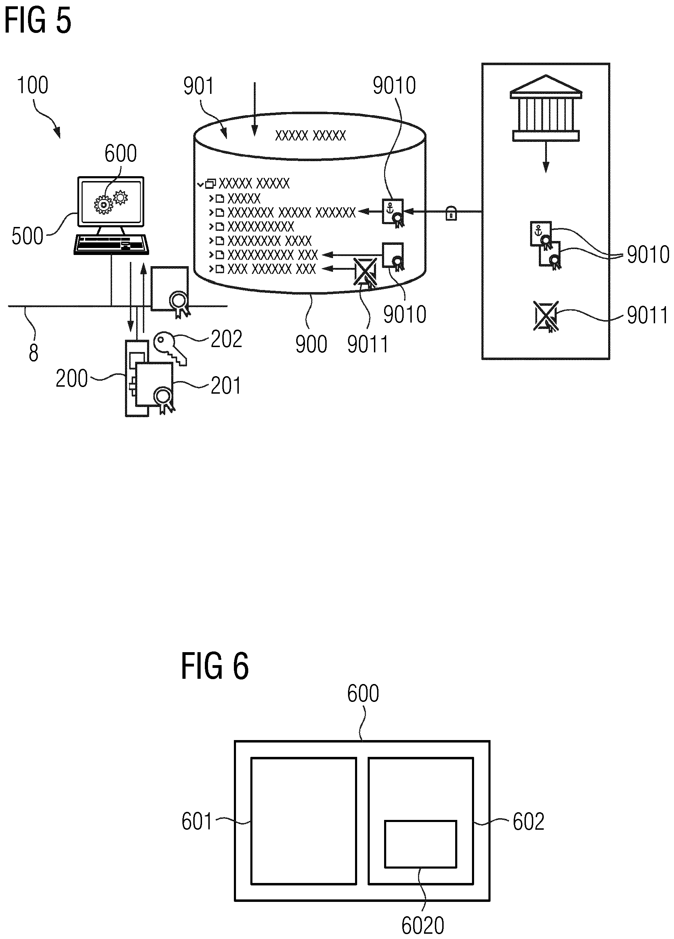

FIG 5 zeigt einen Ausschnitt eines industriellen Kontrollsystems 100 einer Automatisierungsanlage, insbesondere einer Produktions- oder Prozessanlage. Die Komponenten des industriellen Kontrollsystems 100 sind beispielsweise über industrielles Ethernet 8 verbunden. Es versteht sich, dass die Komponenten des industriellen Kontrollsystems 100 auch über andere gängigen Verbindungsarten, zum Beispiel WLAN, Bluetooth, WAN etc. zwecks Informationsaustausches verbunden sein können.

Das industrielle Kontrollsystem 100 weist eine als ein Industrial Controller ausgebildete Komponente 200 und einen Server 500 auf.

Zum Verifizieren der Komponente 200 weist der Server 500 ein Anomaly Detection Tool 600 auf, wobei das Anomaly Detection Tool 600 dem erfindungsgemäßen System entspricht.

Das Anomaly Detection Tool 600 umfasst ein erstes Modul 601 ein zweites Modul 602 auf (siehe FIG 6). Die Module 601 und 602 können beispielsweise als Softwaremodule ausgebildet sein. Denkbar ist es aber auch, dass zumindest eines der Module 601, 602 als eine Kombination von Soft- und Hardwarekomponenten ausgebildet ist.

Beim Anschließen der Komponente 200 baut das erste Modul 601 mit der Komponente 200 eine Vertrauensbeziehung auf, um ein Komponentenzertifikat 201 von der Komponente 200 abzufragen. FIG 5 lässt erkennen, dass der Industrial Controller 200 das Komponentenzertifikat 201 mit einem zu dem Komponentenzertifikat 201 zugehörigen öffentlichen Schlüssel umfassen kann.

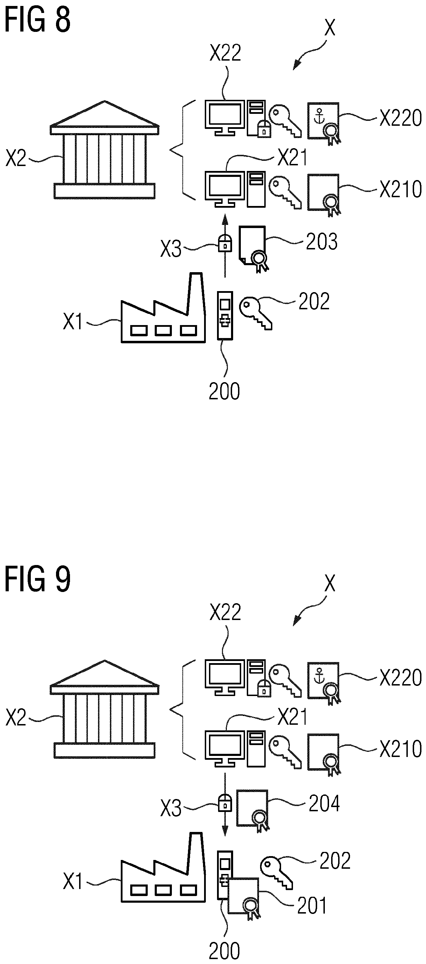

Um Beantragung und Erstellung des Komponentenzertifikats 201 zu veranschaulichen wird nun auf Figuren 8 und 9 Bezug genommen. Komponentenzertifikate wie das Komponentenzertifikat 201 können z.B. von einer dafür zuständigen vertrauenswürdigen ausstellenden Zertifizierungsstelle (engl. Issuing Certification Authority, kurz Issuing CA) des Herstellers ausgestellt und signiert werden. Außerdem sind Komponentenzertifikate an eine eindeutige ID (z.B. eine Seriennummer) der jeweiligen Komponente sowie an einen Geheimschlüssel (engl. Private Key) gebunden, wobei der Geheimschlüssel in der Komponente / in dem Gerät (z.B. softwaregebunden) bzw. im Idealfall in der Hardware der Komponente (hardwaregebunden) sicher hinterlegt ist.

Komponentenzertifikate können beispielsweise während der Fertigung in einem Gerätewerk in die zugehörigen Komponenten / Geräte gebracht werden.

Konkret illustrieren Figuren 8 und 9 Schritte einer Aufbringung eines Komponentenzertifikats in Form eines Herstellergerätezertifikats (MDC) 201 auf einen Industrial Controller 200.

Ein Hersteller X verfügt über / umfasst ein Gerätewerk X1, in dem Industrial Controller 200 hergestellt werden, und eine Public-Key-Infrastruktur mit einem Trust-Center X2 zum Ausstellen von vertrauenswürdigen Zertifikaten.

Während der Fertigung kann ein Geheimschlüssel 202 in der Hardware des Gerätes 200 generiert werden. Mit diesem Geheimschlüssel 202 kann das Gerät 200 anschließend einen Zertifikatsantrag 203 (engl. Certificate Signing Request) signieren und ihn über eine sichere Kommunikation X3, z.B. verschlüsselt, an eine zuständige Issuing Certification Authority X21, die sich z.B. in dem Trust-Center X2 des Herstellers X befinden kann, übermitteln.

Das Trust-Center X2 kann eine Root-Zertifizierungsstelle X22 (Root CA) umfassen, die (selbstsignierte) Root-Zertifikate / Vertrauensanker X220 erstellen kann. Die Issuing CA X21 kann Zertifikatsantrag 203 bearbeiten und basierend darauf ein Komponentenzertifikat 201 erstellen. Das Komponentenzertifikat 201 kann somit als eine Kette von Zertifikaten ausgebildet sein. Solche Zertifikatsketten werden auch als Zertifizierungspfade oder Vertrauensketten bezeichnet. Das letzte Zertifikat in der Vertrauenskette 201 ist ein von der Root CA X22 ausgestellter Vertrauensanker X220.

Der Zertifikatsantrag 203 enthält in der Regel einige wichtigen Gerätedaten (z.B. herstellerspezifische Gerätedaten), insbesondere den Namen des Herstellers ("X") und des Fertigungswerkes ("X1"), eine ID (z.B. Seriennummer) des Gerätes 200 sowie den öffentlichen Schlüssel (engl. Public Key) zu dem zum Signieren des Zertifikatsantrags 203 verwendeten Geheimschlüssel 202. Die Daten aus dem Zertifikatsantrag 203 (einschl. des öffentlichen Schlüssels) können von der Issuing CA X21 in das ausgestellte Gerätezertifikat 201 übernommen werden. Nach dem Ausstellen des MDC 201 kann dieses von der Issuing CA X21 auf einem sicheren Weg X3 zum Gerätewerk X1 übertragen und anschließend auf das Gerät 200 gebracht werden (siehe FIG 9).

Aufgrund des oben Gesagten kann das Komponentenzertifikat 201 außer den herstellerspezifischen Gerätedaten, insbesondere dem Namen des Herstellers ("X") und des Fertigungswerkes ("X1"), der Seriennummer des Gerätes 200 sowie dem öffentlichen Schlüssel (engl. Public Key) zu dem zum Signieren des Zertifikatsantrags 203 verwendeten Geheimschlüssel 202 auch ein Zertifikat X210 der zugehörigen, übergeordneten Issuing CA X21, die für das Gerätewerk X1 namens "X1" zuständig ist, sowie das Root-Zertifikat X220 der zugehörigen, übergeordneten Root-CA X22, die die für den Hersteller X namens "X" zuständig ist, umfassen. All dies sind Beispiele der (für die Prüfung durchs das Anomaly Detection Tool 600) relevanten Gerätedaten.

Außerdem kann das Komponentenzertifikat 201 ID (engl. identification) des Antragstellers/Besitzers, einen Namen des Gerätes, einen Namen des Ausstellers (der Issuing-CA X21) sowie seinen Gültigkeitsraum ("gültig von ... bis ..."). Eine oder mehrere dieser Angaben können beispielsweise durch Normen, wie z.B. IEEE 802.1AR 2018 oder durch herstellerspezifische Normen vorgeschrieben sein.

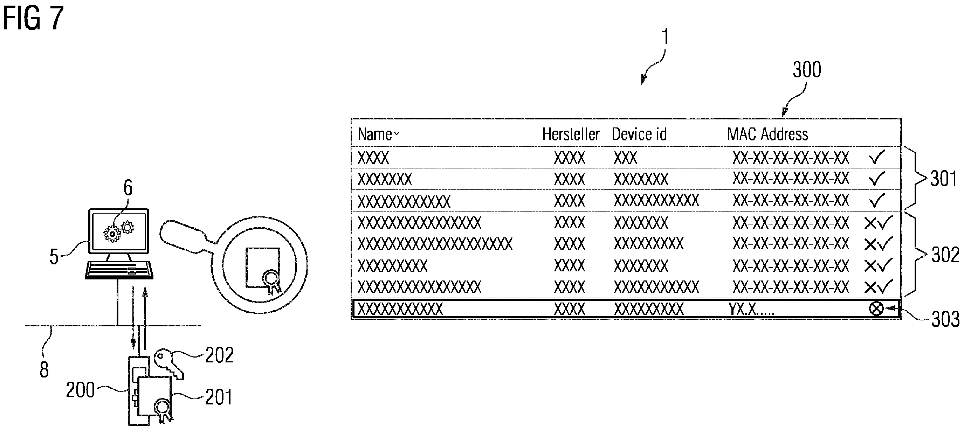

Figuren 5 bis 7 lassen erkennen, dass das zweite Modul 602 das Komponentenzertifikat 201 prüft. Die Prüfung findet interaktiv statt. Das Anomaly Detection Tool 600 tauscht dabei Informationen mit der Komponente 200 aus. Eine solche Interaktion ist bei Anomaly Detection Tools 6 nach dem Stand der Technik nicht vorgesehen (FIG 1 bis FIG 4). Für die Prüfung verwendet das Anomaly Detection Tool 600 relevante, beispielsweise herstellerspezifische Daten 901, die in einer vertrauenswürdigen Datenbank 900 verwahrt werden. Das zweite Modul 602, das beispielsweise als ein Softwaremodul ausgebildet ist, kann einen entsprechenden Programmcode umfassen, der Befehle aufweist, die beim Ausführen des Programmcodes, die interaktive Prüfung des Komponentenzertifikats 201 bewirken.

Die vertrauenswürdige Datenbank 900 kann beispielsweise dem Hersteller X der Komponente 200 gehören, z.B. als ein Zertifikat-Repository des Herstellers X ausgebildet sein.

Darüber hinaus kann das Anomaly Detection Tool 600 einen beispielsweise in dem zweiten Modul 602 angeordneten sicheren Speicher 6020 aufweisen, um die relevanten Daten 901 von der vertrauenswürdigen Datenbank 900 in regelmäßigen Zeitabständen oder ereignisgesteuert, z.B. wenn bei einer Änderung der releventen Daten 901 in der Datenbank 900, über auf sichere Art und Weise, z.B. über einen sicheren Kommunikationskanal zu beziehen und auf dem sicheren Speicher 6020 zu hinterlegen oder zu installieren.

Die relevanten Daten 901 können (herstellerspezifische) Vertrauensketten 9010 zum Komponentenzertifikat 201 und/oder Zertifikatssperrlisten (Listen der gesperrten Zertifikate) 9011 umfassen.

Basierend auf den relevanten Daten 901 kann das Anomaly Detection Tool 600 die Korrektheit, die Konsistenz und die Gültigkeit der Komponentenzertifikatsinhalte prüfen, eine Identitäts- und Originalitätsprüfung der Komponente 200 durchführen und einen Revokationsstatus des Komponentenzertifikats 201 überprüfen.

Während der interaktiven Prüfung kann die Komponente 200 ihren privaten Schlüssel zum Komponentenzertifikat 201 verwenden, ohne dabei diesen privaten Schlüssel 202 preiszugeben.

Das Ergebnis der Prüfung kann beispielsweise lauten: "Prüfung erfolgreich", "Prüfung fehlgeschlagen" oder "Prüfung nicht möglich".

Abhängig von dem Ergebnis der Prüfung generiert das Anomaly Detection Tool 600 eine Meldung und diese beispielsweise an eine zuständige Instanz absetzen.

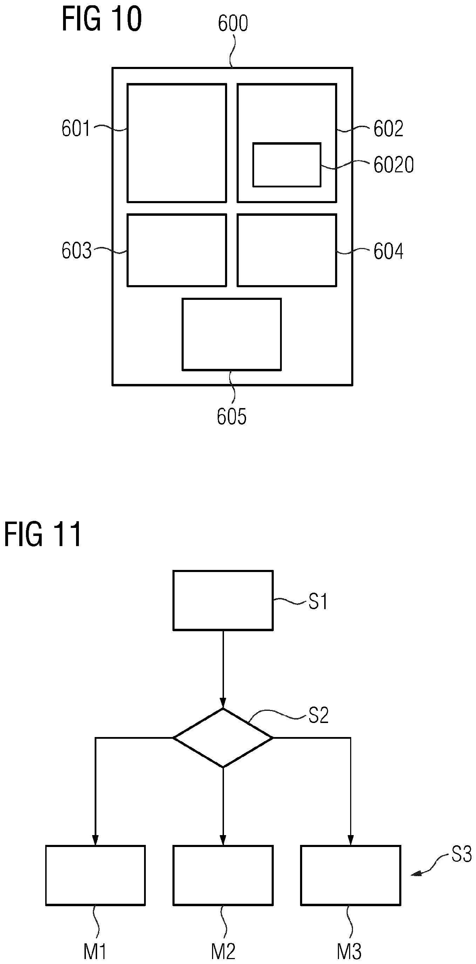

Nach der Prüfung können relevante, z.B. herstellerspezifische Informationen aus dem geprüften Komponentenzertifikat 201 in ein computerimplementiertes Geräteinventar 300 aufgenommen und dem Ergebnis der Prüfung gekennzeichnet, beispielsweise gehighlightet oder mit einem adäquaten Status und/oder Flag versehen werden. Dafür kann bei dem Anomaly Detection Tool 600 ein drittes Modul 603 vorgesehen sein (siehe FIG 10).

Das Anomaly Detection Tool 600 kann das computerimplementierte Geräteinventar 300 umfassen.

Bei einer erfolgreichen Prüfung können die relevanten, z.B. herstellerspezifischen Daten (insbesondere die jeweiligen MDCs) mit einem (ersten) Flag 301 "Identity / Originality: successfully checked" - in dem im Anomaly Detection Tool 600 enthaltenen computerimplementierten Geräteinventar 300 oder in dem Geräteinventar der Anlage (nicht gezeigt) sicher abgelegt werden.

Falls die Prüfung fehlgeschlagen ist, wenn beispielsweise das Komponentenzertifikat 201 bereits widerrufen wurde, kann ebenfalls eine entsprechende Meldung an die zuständige Instanz abgesetzt werden. Dabei können die der Prüfung unterzogenen relevanten, z.B. herstellerspezifischen Daten (insbesondere die jeweiligen MDCs) - versehen mit einem (zweiten) Status/Flag 302 (z.B. "Identity / Originality: check failed") - in dem eigenen integrierten Inventory 300 des Anomaly Detection Tools 600 oder im Inventory der Anlage (hier nicht gezeigt) sicher abgelegt werden.

Falls eine Prüfung z.B. aufgrund des Fehlens des Komponentenzertifikats 201 und/der des zugehörigen Geheimschlüssels nicht möglich ist, kann ebenfalls eine entsprechende Meldung (darüber, dass die Prüfung nicht möglich ist und dass das Gerät 200 somit nicht nachweisbar vertrauenswürdig ist) generiert und an eine zuständige Instanz übermittelt werden. In diesem Fall können die vorhandenen (nicht geprüften) relevanten Daten - versehen mit einem (dritten) Status/Flag 303 (z.B. "Identity / Originality: check infeasible") - in das Inventory 300 oder ein dediziertes Anlagen-Inventory (hier nicht gezeigt) aufgenommen werden.

FIG 10 lässt erkennen, dass das Anomaly Detection Tool 600 ein viertes Modul 604 umfassen kann, welches konfiguriert ist, unterschiedliche Prüfungsprofile für die Prüfung unterschiedlicher Komponenten zu erstellen und/oder zu konfigurieren und/oder zu nutzen. Dies ist in jenem Fall vorteilhaft, in dem verschiedene Hersteller in ihren Geräten unterschiedliche Prüfverfahren implementiert haben.

FIG 10 ist zu entnehmen, dass das Anomaly Detection Tool 600 ein ein fünftes Modul 605 umfassen kann, das konfiguriert ist, in Abhängigkeit von dem Ergebnis der Prüfung unterschiedliche Aktionsprofile zu erstellen und/oder zu konfigurieren und/oder zu nutzen und/oder - insbesondere in einer besonders kritischen Umgebung - weitere Kommunikation zwischen der Komponente und/oder anderen Anlagenkomponenten zu unterbinden, z.B. wenn die Prüfung fehlgeschlagen ist oder nicht möglich ist.

FIG 11 zeigt ein Flussdiagramm einer Ausführungsform des erfindungsgemäßen Verfahrens zum Verifizieren von Komponenten eines industriellen Kontrollsystems. Dabei wird zunächst (Schritt S1) eine Vertrauensbeziehung mit einer Komponente des industriellen Kontrollsystems aufgebaut und ein Komponentenzertifikat von der Komponente abgefragt, wobei das Komponentenzertifikat relevante, z.B. herstellerspezifische Informationen bezüglich der Komponente aufweist.

Danach wird eine interaktive Prüfung des Komponentenzertifikats basierend auf in einer vertrauenswürdigen Datenbank verwahrten relevanten, z.B. herstellerspezifischen Daten durchgeführt (Schritt S2). Anschließend wird basierend auf einem Ergebnis der Prüfung eine Meldung generiert (Schritt S3).

FIG 11 zeigt ein Beispiel des Verfahrens, bei dem die Prüfung drei mögliche Ausgänge aufweist: M1 ("Prüfung erfolgreich"), M2 ("Prüfung fehlgeschlagen") und M3 ("Prüfung nicht möglich").

Das in FIG 11 illustrierte Verfahren mit Schritten S1 bis S3 kann beispielsweise in der in den Figuren 5 bis 10 beschriebenen Umgebung mittels des Anomaly Detection Tools 600 durchgeführt werden.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können das beschriebene Anomaly Detection Tool und das industrielle Kontrollsystem durch Merkmale des Verfahrens und das Verfahren durch Merkmale des Anomaly Detection Tools und des industriellen Kontrollsystems vervollständigt werden.

## Patentansprüche

1. System zum Verifizieren von Komponenten eines industriellen Kontrollsystems (100), wobei das System (600) umfasst
- ein erstes Modul (601), das konfiguriert ist, eine Vertrauensbeziehung mit einer Komponente (200) des industriellen Kontrollsystems (100) aufzubauen und ein Komponentenzertifikat (201) von der Komponente (200) abzufragen, wobei das Komponentenzertifikat (201) relevante Informationen bezüglich der Komponente (200) aufweist,
- ein zweites Modul (602), das konfiguriert ist, das Komponentenzertifikat (201)
* basierend auf in einer vertrauenswürdigen Datenbank (900) verwahrten relevanten Daten (901) und
* interagierend mit der Komponente (200) zu prüfen, und auf ein Ergebnis der Prüfung adäquat zu reagieren.

2. System nach Anspruch 1, wobei das System (600) einen sicheren Speicher (6020) aufweist und dazu konfiguriert ist, die relevanten Daten (901) von der vertrauenswürdigen Datenbank (900) in regelmäßigen Zeitabständen oder ereignisgesteuert über eine sichere Verbindung zu beziehen und auf dem sicheren Speicher (6020) zu hinterlegen oder zu installieren.

3. System nach Anspruch 1 oder 2, wobei das Komponentenzertifikat ein Herstellergerätezertifikat ist.

4. System nach einem der Ansprüche 1 bis 3, wobei die relevanten Daten (901) Vertrauensketten (9010) und/oder eine oder mehrere Zertifikatssperrlisten (9011) umfassen.

5. System nach einem der Ansprüche 1 bis 4, wobei das System (600) ein drittes Modul (603) umfasst, das konfiguriert ist, relevante Informationen aus dem Komponentenzertifikat (201) in ein computerimplementiertes Geräteinventar (300) aufzunehmen und diese relevanten Informationen entsprechend dem Ergebnis der Prüfung zu kennzeichnen, beispielsweise zu highlighten oder mit einem adäquaten Status und/oder Flag (301, 302,303) zu versehen.

6. System nach einem der Ansprüche 1 bis 5, wobei das System (600) ein viertes Modul (604) umfasst, das konfiguriert ist, unterschiedliche Prüfungsprofile für die Prüfung unterschiedlicher Komponenten zu erstellen und/oder zu konfigurieren und/oder zu nutzen.

7. System nach einem der Ansprüche 1 bis 6, wobei das System (600) ein fünftes Modul (605) umfasst, das konfiguriert ist, in Abhängigkeit von dem Ergebnis der Prüfung unterschiedliche Aktionsprofile zu erstellen und/oder zu konfigurieren und/oder zu nutzen und/oder weitere Kommunikation zwischen der Komponente und anderen Anlagenkomponenten zu unterbinden.

8. Computerimplementiertes Verfahren zum Verifizieren von Komponenten eines industriellen Kontrollsystems (100), wobei
- eine Vertrauensbeziehung mit einer Komponente (200) des industriellen Kontrollsystems (100) aufgebaut und ein Komponentenzertifikat (201) von der Komponente (200) abgefragt wird, wobei das Komponentenzertifikat (201) relevante Informationen bezüglich der Komponente (200) aufweist,
- das Komponentenzertifikat (201) in Interaktion mit der Komponente (200) und basierend auf in einer vertrauenswürdigen Datenbank (900) verwahrten relevanten Daten (901) geprüft wird und
- auf ein Ergebnis der Prüfung adäquat reagiert wird.

9. Verfahren nach Anspruch 8, wobei die relevanten Daten (901) von der vertrauenswürdigen Datenbank (900) in regelmäßigen Zeitabständen oder ereignisgesteuert über eine sichere Verbindung bezogen und auf einem sicheren Speicher (6020) hinterlegt oder installiert wird.

10. Verfahren nach Anspruch 8 oder 9, wobei das Komponentenzertifikat ein Herstellergerätezertifikat ist und/oder die relevanten Daten (901) Vertrauensketten (9010) und/oder eine oder mehrere Zertifikatssperrlisten (9011) umfassen.

11. Verfahren nach einem der Ansprüche 8 bis 10, wobei relevante Informationen aus dem Komponentenzertifikat in ein computerimplementiertes Geräteinventar (300) aufgenommen werden und diese relevanten Informationen entsprechend dem Ergebnis der Prüfung gekennzeichnet, beispielsweise gehighlightet oder mit einem adäquaten Status und/oder Flag (301,302,303) versehen werden.

12. Verfahren nach einem der Ansprüche 8 bis 11, wobei unterschiedliche Prüfungsprofile für die Prüfung unterschiedlicher Komponenten erstellt und/oder konfiguriert und/oder genutzt werden.

13. Verfahren nach einem der Ansprüche 8 bis 12, wobei in Abhängigkeit von dem Ergebnis der Prüfung unterschiedliche Aktionsprofile erstellt und/oder konfiguriert und/oder genutzt werden und/oder weitere Kommunikation zwischen der Komponente und anderen Anlagenkomponenten unterbunden wird.

14. Computerimplementiertes Geräteinventar umfassend zumindest ein Komponentenzertifikat einer Komponente und eine der Komponente zugehörige Meldung, die nach einem Verfahren nach einem der Ansprüche 8 bis 13 generiert ist.

15. Computerprogramm umfassend Befehle, die bei der Ausführung des Programms durch ein System dieses veranlassen, das Verfahren nach einem der Ansprüche 9 bis 13 auszuführen.
